# EUROPEAN PATENT APPLICATION

(11) **EP 4 794 032 A1**
(43) Date of publication of application: **19.08.2026**
(21) Application number: 25708327.9
(22) Date of filing: 15.01.2025
(51) Int. Cl.: H01M 4/62, H01M 10/42, H01M 4/02, H01M 4/36, H01M 4/04, H01M 10/0525

(54) **LITHIUM FERRITE PRE-LITHIATION ADDITIVE, POSITIVE ELECTRODE MATERIAL, POSITIVE ELECTRODE SHEET, AND SECONDARY BATTERY**

(30) Priority: 31.12.2024 CN 202411982258
(71) Applicant: Hubei Wanrun New Energy Technology Co., Ltd., Shiyan, Hubei 442500 (CN)
(72) Inventor: WANG, Qin, Shiyan, Hubei 442500 (CN); LV, Fei, Shiyan, Hubei 442500 (CN); PENG, Tangping, Shiyan, Hubei 442500 (CN); TAO, Lijuan, Shiyan, Hubei 442500 (CN); ZHANG, Li, Shiyan, Hubei 442500 (CN); CHEN, Zhicheng, Shiyan, Hubei 442500 (CN); SU, Xin, Shiyan, Hubei 442500 (CN); LIU, Canshang, Shiyan, Hubei 442500 (CN); ZHANG, Hao, Shiyan, Hubei 442500 (CN); ZHOU, Weiwei, Shiyan, Hubei 442500 (CN)
(74) Representative: Winter, Brandl - Partnerschaft mbB
(86) International application number: PCT/CN2025/072447
(87) International publication number: WO 2026/143774

(57) **Abstract**

The present application relates to the technical field of secondary batteries. Provided are a lithium ferrite lithium supplement, a cathode material, a cathode plate, and a secondary battery. The lithium ferrite lithium supplement of the present disclosure includes a nuclear layer and a shell layer covering a surface of the nuclear layer. A material of the nuclear layer includes Li₅FeO₄, and a material of the shell layer includes a carbon material. I_{D}/I_{G} of the lithium ferrite lithium supplement is 1.0-1.2, and an average thickness of the shell layer is 60 nm-200 nm. In the present disclosure, by forming a carbon layer on the surface of the nuclear layer containing the Li₅FeO₄, the I_{D}/I_{G} is controlled, and the average thickness of the shell layer is controlled, such that the air stability of the lithium ferrite lithium supplement may be effectively improved.

## Description

### Technical Field

The present disclosure relates to the technical field of second batteries, and specifically, to lithium ferrite lithium supplement, cathode material, cathode plate, and secondary battery.

### Background

During the first charging process of a lithium ion battery, about 15% of active lithium ions will participate in the formation of a Solid Electrolyte Interface (SEI) membrane, causing the loss of reversible lithium of a cathode, thus leading to a reduction in the capacity of the battery. In order to solve the problem of lithium loss during the first charging process of the lithium ion battery, pre-lithiation is generally performed by using a method of adding a lithium supplement to a cathode material in the industry. Up to now, researchers have explored a variety of lithium supplements for cathode pre-lithiation, including Li₂NiO₂, Li₂O₂, Li₂O₂, Li₂C₄O₄, Li₂S, Li₃N, Li₆CoO₄, Li₅FeO₄ (LFO), etc. However, the incorporation of binary compounds such as Li₂O₂, Li₂O₂, Li₂C₄O₄, Li₂S, and Li₃N into a current battery production technology as lithium supplements faces significant challenges, and the main problems are that the binary compounds are incompatible with an existing electrode preparation system, and are high in cost. In contrast, ternary compounds such as Li₂NiO₂, Li₂C₄O₄, Li₆CoO₄, LFO, etc. have better safety, stability, and compatibility.

The LFO stands out for its abundant raw material resources, high theoretical capacity (867 mAh/g), and industrialization potential. However, the LFO is extremely poor in air stability, and once the LFO is in contact with air, its specific capacity reduces rapidly. In order to solve the above technical problems, the researchers improve the air stability of the LFO to a certain extent by coating Li₆CoO₄ on a surface of the LFO, doping zirconium in the LFO, or using a polyethylene oxide-polypropylene oxide-polyethylene copolymer as a carbon coating to coat on the surface of the LFO. However, a capacity retention rate of the LFO modified by the method after 24 hours of exposure in air is difficult to reach 80%, and its long-term stability in air still needs to be improved.

### Summary

In view of the technical problems in Background, the present disclosure provides lithium ferrite lithium supplement, cathode material, cathode plate, and secondary battery, so as to solve the technical problem of poor air stability of existing lithium ferrite lithium supplements.

In first aspect, an embodiment of the present disclosure provides a lithium ferrite lithium supplement. The lithium ferrite lithium supplement includes a nuclear layer and a shell layer covering a surface of the nuclear layer. A material of the nuclear layer includes Li₅FeO₄, and a material of the shell layer includes a carbon material. I_{D}/I_{G} of the lithium ferrite lithium supplement is 1.0-1.2, and an average thickness of the shell layer is 60 nm-200 nm.

In the technical solution of this embodiment of the present disclosure, by forming a core-shell structure and controlling the average thickness of the shell layer, the shell layer can prevent the Li₅FeO₄ in the nuclear layer from being in contact with air to a certain extent. Further, the I_{D}/I_{G} is an intensity ratio of a D peak to a G peak in a Raman spectrum. The D peak is a peak near 1350 cm⁻¹, and is used to characterize defects; and the G peak is a peak near 1580 cm⁻¹, and is used to characterize a degree of graphitization. If the I_{D}/I_{G} is greater, it indicates that there are more defects. In the present disclosure, by controlling the I_{D}/I_{G} of the lithium ferrite lithium supplement, an appropriate number of defects is formed in the shell layer, and adsorption of H₂O and CO₂ in air by the shell layer is promoted, thereby improving the air stability of the lithium ferrite lithium supplement.

In some embodiments, a free radical concentration of the lithium ferrite lithium supplement is 1.2×10¹³ spins/g-1.8×10¹³ spins/g.

In the present disclosure, the air stability of the lithium ferrite lithium supplement is excellent by controlling the free radical concentration of the lithium ferrite lithium supplement within the range.

In some embodiments, in the lithium ferrite lithium supplement, a mass fraction of a carbon element is 2%-5%.

In the embodiments, by controlling the mass fraction of the carbon element, on the one hand, the uniform and compact shell layer is formed to further improve the air stability of the lithium ferrite lithium supplement, and on the other hand, the conductivity of the lithium ferrite lithium supplement is improved, thereby improving a lithium ion mobility. By being used in a cathode material, the lithium ferrite lithium supplement may participate the formation of an SEI membrane anterior to a cathode active material during first charging and discharging processes, thereby increasing a reversible capacity of the cathode material.

In some embodiments, a D50 particle size of the lithium ferrite lithium supplement is 3 µm-6 µm.

In the embodiments, by controlling the D50 particle size of the lithium ferrite lithium supplement, in an aspect, a specific surface area of the lithium ferrite lithium supplement is increased, and a shell layer material forms a good bonding effect with H₂O and CO₂ in air, thereby inhibiting H₂O and CO₂ in air from further reacting with the nuclear layer material Li₅FeO₄; in another aspect, the lithium ferrite lithium supplement is dispersed more easily, so as to form an uniform cathode material with the cathode active material; and in still another aspect, an electronic transmission rate and an ion transmission rate can be accelerated, thereby improving the electrochemical performance of the formed cathode material.

In some embodiments, a specific capacity of the lithium ferrite lithium supplement after 24 h of exposure in air at 25 °C and 20% relative humidity is higher than 570 mAh/g; and/or the specific capacity of the lithium ferrite lithium supplement after 48 h of exposure in air at 25 °C and 20% relative humidity is higher than 530 mAh/g; and/or the specific capacity of the lithium ferrite lithium supplement after 72 h of exposure in air at 25 °C and 20% relative humidity is higher than 520 mAh/g.

In the present disclosure, the provided lithium ferrite lithium supplement has excellent specific capacity and air stability. When the lithium ferrite lithium supplement is used for preparing the cathode material, a specific capacity of the prepared cathode material is increased, thereby facilitating the improvement of the electrochemical performance of a secondary battery prepared using the cathode material, that is, the commercialization of the lithium ferrite lithium supplement in the field of the application of the secondary batteries may be improved.

In some embodiments, a capacity retention rate of the lithium ferrite lithium supplement after 24 h of exposure in air at 25 °C and 20% relative humidity is more than 88%; and/or the capacity retention rate of the lithium ferrite lithium supplement after 48 h of exposure in air at 25 °C and 20% relative humidity is more than 82%; and/or the capacity retention rate of the lithium ferrite lithium supplement after 72 h of exposure in air at 25 °C and 20% relative humidity is more than 80%.

In the present disclosure, the provided lithium ferrite lithium supplement is excellent in air stability and suitable for long-term storage, and the cycling stability of the secondary battery prepared using the lithium ferrite lithium supplement is improved. Furthermore, the capacity retention rate of the lithium ferrite lithium supplement after exposure in air for a period of time can still be maintained at a high level, facilitating the improvement of the electrochemical performance of the secondary battery prepared using the lithium ferrite lithium supplement.

In second aspect, an embodiment of the present disclosure provides a cathode material. The cathode material includes a cathode active material, a conductive agent, a binder, and a lithium supplement. The lithium supplement is the lithium ferrite lithium supplement of the first aspect of the present disclosure.

In the technical solution of this embodiment of the present disclosure, as the lithium ferrite lithium supplement in the above embodiments is used, a specific capacity of the cathode material obtained through preparation may be effectively improved.

In some embodiments, a mass ratio of the lithium supplement to the cathode active material is (1:100)-(5:100).

In the embodiments, if too little lithium supplement is added, the number of lithium ions supplemented is too small, and a lithium supplement effect of the lithium supplement is poor; and if excessive lithium supplement is added, the electrochemical performance of the cathode material is affected.

In some embodiments, a capacity retention rate of the cathode material of the present disclosure after 100 cycles at a rate of 0.33 C is higher than 93%.

In the embodiments, the cathode material prepared using the lithium ferrite lithium supplement is good in cycling performance and high in capacity retention rate, such that the cycling stability of the secondary battery prepared using the cathode material is improved, and the service life of the secondary battery may be prolonged, thereby widening an application range of the prepared secondary battery.

In third aspect, an embodiment of the present disclosure provides a cathode plate, which includes a current collector and a cathode material located on one side or two sides of the current collector. The cathode material is the cathode material of the second aspect of the present disclosure.

In the embodiments, the cathode plate includes the cathode material, and thus has the performance of a high capacity retention rate.

In fourth aspect, an embodiment of the present disclosure provides a secondary battery, which includes a cathode plate, an anode plate, and a separator. The cathode plate is the cathode plate of the third aspect of the present disclosure.

In the embodiments, the secondary battery includes the cathode plate, and thus has the advantages of being high in energy density and good in cycling performance.

The above descriptions are only an overview of the technical solutions of the present disclosure. In order to have a clearer understanding of the technical means of the present disclosure, and implement same according to the contents of the specification and in order to make the above and other purposes, features, and advantages of the present disclosure more obvious and easier to understand, the specific embodiments of the present disclosure are specifically listed below.

### Brief Description of the Drawings

In order to more clearly explain the technical solutions of the present disclosure, a brief introduction will be given below to the drawings required to be used in the present disclosure. It is apparent that the drawings in the following descriptions are merely some implementations of the present disclosure. Other drawings can be obtained from those of ordinary skill in the art according to these drawings without any creative work.
Fig. 1 is a Transmission Electron Microscope (TEM) diagram of a lithium ferrite lithium supplement according to Embodiment 1.
Fig. 2 is a Raman spectrum diagram of a lithium ferrite lithium supplement according to Embodiment 1 and Comparative embodiment 1.
Fig. 3 is a Scanning Electron Microscope (SEM) diagram of a lithium ferrite lithium supplement according to Embodiment 1 and Comparative embodiment 1.
Fig. 4 is an X-Ray Diffraction (XRD) diagram of a lithium ferrite lithium supplement placed in air at 25 °C and 20% relative humidity for different times according to Embodiment 1 and Comparative embodiment 1.
Fig. 5 is a Galvanostatic Intermittent Titration Technique (GITT) test diagram of a lithium ferrite lithium supplement according to Embodiment 1 and Comparative embodiment 1.
Fig. 6 is a specific capacity data diagram of a lithium ferrite lithium supplement placed in air at 25 °C and 20% relative humidity for different times according to Embodiment 1 and Comparative embodiment 1.
Fig. 7 is a specific capacity data diagram of a lithium ferrite lithium supplement placed in air at 25 °C and different relative humidity conditions for different times according to Embodiment 1.
Fig. 8 is a test diagram of rate performance of a lithium ferrite lithium supplement according to Embodiment 1 and Comparative embodiment 1.
Fig. 9 is a test diagram of rate performance and cycling performance of a cathode plate in half battery according to Embodiment 8 and Comparative embodiment 5.
Fig. 10 is a test diagram of rate performance of a secondary battery according to Embodiment 9 and Comparative embodiment 6.
Fig. 11 is a test diagram of cycling performance of a secondary battery at 0.5 C according to Embodiment 9 and Comparative embodiment 6.

### Detailed Description of the Embodiments

The embodiments of the technical solutions of the present disclosure will be described in detail below in conjunction with the accompanying drawings. The following embodiments are only intended to provide a clearer explanation of the technical solutions of the present disclosure, and therefore they are only used as examples and rather than as limitations to the scope of protection of the present disclosure.

Unless otherwise defined, all technical and scientific terms as used herein have the same meanings as those commonly understood by those skilled in the technical field of the present disclosure; the terms as used herein are only intended for the purpose of describing specific embodiments rather than limiting the present disclosure; and the terms "including" and "having" in the description and claims, as well as the accompanying drawings of the present disclosure, and any variations thereof, are intended to cover non-exclusive inclusion.

In the description of embodiments of the present disclosure, the technical terms "first" and "second", etc., are only used to distinguish different objects and cannot be understood as indicating or implying relative importance or implicitly indicating the number, specific order or primary and secondary relationships of the indicated technical features. In the description of embodiments of the present disclosure, "multiple" means more than two, unless otherwise specifically defined explicitly.

Reference to "embodiments" herein means that specific features, structures, or characteristics described in combination with embodiments may be included in at least one embodiment of the present disclosure. The phrase appearing at various positions in the specification does not necessarily refer to the same embodiment, nor is it an independent or alternative embodiment mutually exclusive with other embodiments. Those skilled in the art will explicitly and implicitly understand that the embodiments described herein can be combined with other embodiments.

In the description of the embodiments of the present disclosure, the term "and/or" is only used to describe an association relationship describing the associated objects, indicating that there can be three kinds of relationships, for example "A" and/or "B" may indicate three cases: existence of "A" alone, coexistence of "A" and "B", and existence of "B" alone. In addition, the character "/" as used herein generally indicates an "or" relationship between the front and back associated objects.

In the description of the embodiments of the present disclosure, the term "multiple" refers to more than two (including two), similarly, "multiple groups" refers to more than two groups (including two groups), and "multiple pieces" refers to more than two pieces (including two pieces).

In the description of the embodiments of the present disclosure, the orientation and position relationships indicated by the technical terms "center", "lengthwise", "crosswise", "length", "width", "thickness", "up", "down", "front", "back", "left", "right", "vertical", "horizontal", "top", "bottom", "inside", "outside", "clockwise", "counterclockwise", "axial", "radial" and "circumferential", etc., are based on the orientation or position relationship as shown in the accompanying drawings, it is only for the convenience of describing the embodiments of the present disclosure and simplifying the description, rather than indicating or implying that the device or element referred to thereby must have a specific orientation and be constructed and operated in a specific orientation, and thus it cannot be understood as limitations on the embodiments of the present disclosure.

In the description of the embodiments of the present disclosure, unless otherwise specified and limited, the terms "installation", "interconnection", "connection", "fixation", and the like should be understood in a broad sense, for example, it can be either fixed connection, or detachable connection, or integrated connection; it can be either mechanical connection or electrical connection; and it can be either direct connection, or indirect connection through intermediate media, or it can be the internal communication between two components or the interaction between two components. For those of ordinary skill in the art, the specific meanings of the above terms in the embodiments of the present disclosure can be understood according to the specific situations.

A lithium ion battery has the problem of lithium loss during first charging and discharging processes. At present, pre-lithiation is generally performed by using a method of adding a lithium supplement to a cathode material, so as to increase a capacity of the battery. LFO stands out for its abundant raw material resources, high theoretical capacity (867 mAh/g), and industrialization potential among numerous lithium supplements. Its charging and discharging voltage windows are compatible with a commercial cathode material, and its production process fits perfectly with a manufacturing process of existing lithium ion batteries. The LFO has various advantages, but its extremely poor air stability hinders the progress of its commercialization. Carbon atoms in CO₂ in air may bind to oxygen active sites on a surface of the LFO, adsorption energy is -0.3963 eV; and oxygen atoms in the CO₂ may be attached to metal ion sites through a coulomb effect, and the adsorption energy is -0.5160 eV. The above data indicates that the CO₂ mainly forms an adsorption effect with the surface of the LFO through the carbon atoms. When H₂O in air is adsorbed on the surface of the LFO, hydrogen atoms in the H₂O form hydrogen bonds with surface active oxygen, and the adsorption energy is -0.2951 eV. Oxygen atoms in the H₂O are adsorbed on the metal ion sites through the coulomb effect, and the adsorption energy is -0.9155 eV. The above data show that the main hydrogen atoms in H₂O form hydrogen bonds with reactive oxygen on the surface of LFO. The above data indicates that the LFO has a strong adsorption effect on the H₂O and the CO₂, and thus, the LFO is more likely to react with the H₂O in air, leading to instability during exposure.

In order to solve the technical problem of poor air stability of the LFO, in first aspect, an embodiment of the present disclosure provides a lithium ferrite lithium supplement. The lithium ferrite lithium supplement includes a nuclear layer and a shell layer covering a surface of the nuclear layer. A material of the nuclear layer includes Li₅FeO₄, and a material of the shell layer includes a carbon material. I_{D}/I_{G} of the lithium ferrite lithium supplement is 1.0-1.2, which may specifically be 1.0, 1.1, 1.2, etc., or may also be other values within the range, and is not specifically limited herein. An average thickness of the shell layer is 60 nm-200 nm, which may specifically be 60 nm, 100 nm, 200 nm, etc., or may also be other values within the range, and is not specifically limited herein.

In the present disclosure, the I_{D}/I_{G} is an intensity ratio of a D peak to a G peak in a Raman spectrum. The D peak is a peak near 1350 cm⁻¹, and is used to characterize defects; and the G peak is a peak near 1580 cm⁻¹, and is used to characterize a degree of graphitization. If the I_{D}/I_{G} is greater, it indicates that there are more defects. In the present disclosure, by coating the shell layer containing the carbon material on the surface of the Li₅FeO₄ nuclear layer and controlling the I_{D}/I_{G}, the shell layer of the lithium ferrite lithium supplement may form a good adsorption effect with the H₂O and CO₂ in air, so as to further prevent same from reacting with the Li₅FeO₄ in the nuclear layer. Furthermore, by controlling the average thickness of the shell layer, the probability of the H₂O and CO₂ in air entering the nuclear layer is further reduced, thereby improving the air stability of the lithium ferrite lithium supplement.

Further, in some embodiments, a free radical concentration of the lithium ferrite lithium supplement is 1.2×10¹³ spins/g-1.8×10¹³ spins/g, which may specifically be 1.2×10¹³ spins/g, 1.4×10¹³ spins/g, 1.8×10¹³ spins/g, etc., or may also be other values within the range, and is not specifically limited herein.

In the present disclosure, the air stability of the lithium ferrite lithium supplement is significantly improved by controlling the free radical concentration of the lithium ferrite lithium supplement.

Further, in some embodiments, in the lithium ferrite lithium supplement, a mass fraction of a carbon element is 2%-5%, which may specifically be 2%, 3%, 4%, 5%, etc., or may also be other values within the range, and is not specifically limited herein.

In the present disclosure, by controlling the mass fraction of the carbon element within the range, an uniform and compact shell layer is formed, such that the shell layer material can be effectively prevented from being in contact with air, thereby improving the air stability of the lithium ferrite lithium supplement. Furthermore, the conductivity of the lithium ferrite lithium supplement is improved by controlling the mass fraction of the carbon element within the range, thereby accelerating a lithium ion mobility. Moreover, when the mass fraction of the carbon element is within the range, the lithium ion mobility is fast, facilitating the increasing of a reversible lithium capacity of the cathode material.

Further, in some embodiments, a D50 particle size of the lithium ferrite lithium supplement is 3 µm-6 µm, which may specifically be 3 µm, 4 µm, 5 µm, 6 µm, etc., or may also be other values within the range, and is not specifically limited herein.

In the present disclosure, the particle size of the lithium ferrite lithium supplement has an impact on its dispersion performance and effective specific surface area. By controlling the D50 particle size of the lithium ferrite lithium supplement within the range, in an aspect, the dispersivity of the lithium ferrite lithium supplement may be improved, and an uniform cathode material is formed with a cathode active material; in another aspect, the adsorption of the H₂O and CO₂ in air by the shell layer material in the lithium ferrite lithium supplement is promoted, thereby further improving the air stability of the lithium ferrite lithium supplement; and in still another aspect, a contact area between the lithium ferrite lithium supplement and electrolyte is enlarged, an SEI membrane is formed, a mobility of lithium ions in the cathode material is accelerated, thereby causing a secondary battery prepared to have good electrochemical performance.

Further, in some embodiments, a specific capacity of the lithium ferrite lithium supplement after 24 h of exposure in air at 25 °C and 20% relative humidity is higher than 570 mAh/g; and/or the specific capacity of the lithium ferrite lithium supplement after 48 h of exposure in air at 25 °C and 20% relative humidity is higher than 530 mAh/g; and/or the specific capacity of the lithium ferrite lithium supplement after 72 h of exposure in air at 25 °C and 20% relative humidity is higher than 520 mAh/g.

In the present disclosure, the provided lithium ferrite lithium supplement has excellent specific capacity and air stability. When the lithium ferrite lithium supplement is used for preparing the cathode material, a specific capacity of the prepared cathode material is increased, thereby facilitating the improvement of the electrochemical performance of a secondary battery prepared using the cathode material, that is, the commercialization of the lithium ferrite lithium supplement in the field of the application of the secondary batteries may be improved.

Further, in some embodiments, a capacity retention rate of the lithium ferrite lithium supplement after 24 h of exposure in air at 25 °C and 20% relative humidity is more than 88%; and/or the capacity retention rate of the lithium ferrite lithium supplement after 48 h of exposure in air at 25 °C and 20% relative humidity is more than 82%; and/or the capacity retention rate of the lithium ferrite lithium supplement after 72 h of exposure in air at 25 °C and 20% relative humidity is more than 80%.

It is to be noted that, before an electrochemical performance test, a preparation process of an electrode includes mixing, coating, slicing, etc., which are all performed in air at 25 °C and 20% relative humidity. The capacity retention rate is obtained through comparison based on the performance of the lithium ferrite lithium supplement electrode freshly prepared.

In the present disclosure, the provided lithium ferrite lithium supplement is excellent in air stability and suitable for long-term storage, and the cycling stability of the secondary battery prepared using the lithium ferrite lithium supplement is improved. Furthermore, the capacity retention rate of the lithium ferrite lithium supplement after exposure in air for a period of time can still be maintained at a high level, facilitating the improvement of the electrochemical performance of the secondary battery prepared using the lithium ferrite lithium supplement.

Typical rather than restricted, the method for preparing the lithium ferrite lithium supplement includes coating a carbon layer on the surface of the Li₅FeO₄, which may specifically mix the Li₅FeO₄ and asphalt, and through calcination, optimizing a calcination process to prepare the lithium ferrite lithium supplement with the carbon material shell layer covering the surface of the Li₅FeO₄ nuclear layer. The Li₅FeO₄ may be obtained through purchase or homemade. In particular, two-stage calcination is used, pre-calcination is first performed at 200 °C-300 °C for 0.5 h-1.5 h, and then, calcination is performed at 600 °C-800 °C for 1 h-4 h. Preferably, calcination is performed at 600 °C-800 °C for 1 h-3 h to obtain the lithium ferrite lithium supplement. During preparation, a mass ratio of the lithium ferrite lithium supplement to the asphalt is controlled to (100:5)-(100:15). The I_{D}/I_{G} of the lithium ferrite lithium supplement obtained through preparation is within the range of 1.0-1.2, and the average thickness of the shell layer of the lithium ferrite lithium supplement is 60 nm-200 nm, such that the lithium ferrite lithium supplement obtained through preparation has excellent air stability.

In second aspect, an embodiment of the present disclosure provides a cathode material. The cathode material includes a cathode active material, a conductive agent, a binder, and a lithium supplement. The lithium supplement is the lithium ferrite lithium supplement of the first aspect of the present disclosure. A mass ratio of the lithium supplement to the cathode active material is (1:100)-(5:100).

In this embodiment, by controlling the amount of the lithium supplement used, in an aspect, the lithium supplement participates in the formation of the SEI membrane by replacing the cathode active material, such that the loss of reversible lithium in the cathode active material is reduced, thereby increasing the specific capacity of the cathode material. In another aspect, the structure stability of cathode and anode materials in a cycling process is ensured by controlling the amount of the lithium supplement used within the range, thereby prolonging the cycle life of a battery. If too little lithium supplement is added, the number of lithium ions supplemented is too small, and a lithium supplement effect of the lithium supplement is poor; and if excessive lithium supplement is added, the electrochemical performance of the cathode material is affected.

Typical rather than restricted, the cathode active material includes at least one of lithium cobaltate, lithium manganate, lithium iron phosphate, and nickel cobalt lithium manganate; the conductive agent includes at least one of carbon black, conductive carbon black, graphite, graphene, acetylene black, and Ketjen black; and the binder includes at least one of polyvinyl alcohol, carboxymethyl cellulose, and polyacrylic acid.

Further, in some embodiments, a capacity retention rate of the cathode material of the present disclosure after 100 cycles at a rate of 0.33 C is higher than 93%.

In the present disclosure, since the lithium ferrite lithium supplement of the first aspect of the present disclosure is added to the cathode material, the cycling stability of the cathode material is improved to a certain extent, thereby facilitating improvement of the cycling performance of a secondary battery, and widening the field of the application of the secondary battery.

In third aspect, an embodiment of the present disclosure provides a cathode plate, which includes a current collector and a cathode material located on one side or two sides of the current collector. The cathode material is the cathode material of the second aspect of the present disclosure.

Since the cathode material is used, the cathode plate has good stability and electrochemical performance.

In fourth aspect, an embodiment of the present disclosure provides a secondary battery, including the cathode plate of the third aspect of the present disclosure. The secondary battery has excellent energy density and cycling stability.

Some specific embodiments are listed below. It should be noted that the embodiments described below are exemplary and are only intended to explain the present disclosure, which cannot be understood as limitations to the present disclosure. If no specific technology or conditions are indicated in the embodiments, the technology or conditions described in the literature in the art or the product specification shall be followed. The reagents or instruments used of which the manufacturers are not indicated are conventional products that are commercially available.

### I. Preparation method

### [Lithium ferrite lithium supplement]

### Embodiment 1

An embodiment of a lithium ferrite lithium supplement of the present disclosure, a method for preparing the lithium ferrite lithium supplement in this embodiment included the following steps.

At S1, nano-Fe₂O₃ and nano-Li₂O were mixed according to a molar ratio of 1:5, so as to obtain a first mixture.

At S2, the first mixture was placed in a tube furnace, and sintered for 24 hours at 700 °C in an argon atmosphere, so as to obtain Li₅FeO₄.

At S3, the Li₅FeO₄ was crushed to a particle size of 1µm-10 µm, and the crushed Li₅FeO₄ was mixed with asphalt according to a mass ratio of 100:8, so as to obtain a second mixture.

At S4, the second mixture was added to the tube furnace and calcined in the argon atmosphere; and a temperature was heated to 200 °C, held for 1 h, then heated to 700 °C, and held for 2 h, so as to obtain the lithium ferrite lithium supplement.

### Embodiment 2

An embodiment of a lithium ferrite lithium supplement of the present disclosure, a method for preparing the lithium ferrite lithium supplement in this embodiment included the following steps.

At S1, nano-Fe₂O₃ and nano-Li₂O were mixed according to a molar ratio of 1:5, so as to obtain a first mixture.

At S2, the first mixture was placed in a tube furnace, and sintered for 24 hours at 700 °C in an argon atmosphere, so as to obtain Li₅FeO₄.

At S3, the Li₅FeO₄ was crushed to a particle size of 1µm-10 µm, and the crushed Li₅FeO₄ was mixed with asphalt according to a mass ratio of 100:12, so as to obtain a second mixture.

At S4, the second mixture was added to the tube furnace and calcined in the argon atmosphere; and a temperature was heated to 300 °C, held for 0.5 h, then heated to 800 °C, and held for 1 h, so as to obtain the lithium ferrite lithium supplement.

### Embodiment 3

An embodiment of a lithium ferrite lithium supplement of the present disclosure, a method for preparing the lithium ferrite lithium supplement in this embodiment included the following steps.

At S1, nano-Fe₂O₃ and nano-Li₂O were mixed according to a molar ratio of 1:5, so as to obtain a first mixture.

At S2, the first mixture was placed in a tube furnace, and sintered for 24 hours at 700 °C in an argon atmosphere, so as to obtain Li₅FeO₄.

At S3, the Li₅FeO₄ was crushed to a particle size of 1µm-10 µm, and the crushed Li₅FeO₄ was mixed with asphalt according to a mass ratio of 100:12, so as to obtain a second mixture.

At S4, the second mixture was added to the tube furnace and calcined in the argon atmosphere; and a temperature was heated to 250 °C, held for 1.5 h, then heated to 600 °C, and held for 3 h, so as to obtain the lithium ferrite lithium supplement.

### Embodiment 4

An embodiment of a lithium ferrite lithium supplement of the present disclosure, a method for preparing the lithium ferrite lithium supplement in this embodiment included the following steps.

At S1, nano-Fe₂O₃ and nano-Li₂O were mixed according to a molar ratio of 1:5, so as to obtain a first mixture.

At S2, the first mixture was placed in a tube furnace, and sintered for 24 hours at 700 °C in an argon atmosphere, so as to obtain Li₅FeO₄.

At S3, the Li₅FeO₄ was crushed to a particle size of 1µm-10 µm, and the crushed Li₅FeO₄ was mixed with asphalt according to a mass ratio of 100:15, so as to obtain a second mixture.

At S4, the second mixture was added to the tube furnace and calcined in the argon atmosphere; and a temperature was heated to 200 °C, held for 1 h, then heated to 700 °C, and held for 2 h, so as to obtain the lithium ferrite lithium supplement.

### Embodiment 5

An embodiment of a lithium ferrite lithium supplement of the present disclosure, a method for preparing the lithium ferrite lithium supplement in this embodiment included the following steps.

At S1, nano-Fe₂O₃ and nano-Li₂O were mixed according to a molar ratio of 1:5, so as to obtain a first mixture.

At S2, the first mixture was placed in a tube furnace, and sintered for 24 hours at 700 °C in an argon atmosphere, so as to obtain Li₅FeO₄.

At S3, the Li₅FeO₄ was crushed to a particle size of 1µm-10 µm, and the crushed Li5FeO4 was mixed with asphalt according to a mass ratio of 100:5, so as to obtain a second mixture.

At S4, the second mixture was added to the tube furnace and calcined in the argon atmosphere; and a temperature was heated to 200 °C, held for 1 h, then heated to 700 °C, and held for 2 h, so as to obtain the lithium ferrite lithium supplement.

### Embodiment 6

An embodiment of a lithium ferrite lithium supplement of the present disclosure, a method for preparing the lithium ferrite lithium supplement in this embodiment included the following steps.

At S1, nano-Fe₂O₃ and nano-Li₂O were mixed according to a molar ratio of 1:5, so as to obtain a first mixture.

At S2, the first mixture was placed in a tube furnace, and sintered for 24 hours at 700 °C in an argon atmosphere, so as to obtain Li₅FeO₄.

At S3, the Li₅FeO₄ was crushed to a particle size of 1µm-10 µm, and the crushed Li₅FeO₄ was mixed with asphalt according to a mass ratio of 100:8, so as to obtain a second mixture.

At S4, the second mixture was added to the tube furnace and calcined in the argon atmosphere; and a temperature was heated to 200 °C, held for 1 h, then heated to 700 °C, and held for 4 h, so as to obtain the lithium ferrite lithium supplement.

### Embodiment 7

An embodiment of a lithium ferrite lithium supplement of the present disclosure, a method for preparing the lithium ferrite lithium supplement in this embodiment included the following steps.

At S1, nano-Fe₂O₃ and nano-Li₂O were mixed according to a molar ratio of 1:5, so as to obtain a first mixture.

At S2, the first mixture was placed in a tube furnace, and sintered for 24 hours at 700 °C in an argon atmosphere, so as to obtain Li₅FeO₄.

At S3, the Li₅FeO₄ was crushed to a particle size of 1µm-10 µm, and the crushed Li₅FeO₄ was mixed with asphalt according to a mass ratio of 100:8, so as to obtain a second mixture.

At S4, the second mixture was added to the tube furnace and calcined in the argon atmosphere; and a temperature was heated to 200 °C, held for 1 h, then heated to 500 °C, and held for 4 h, so as to obtain the lithium ferrite lithium supplement.

### Comparative embodiment 1

A lithium ferrite lithium supplement, differences between the preparation method in this comparative embodiment and that in Embodiment 1 lied in that, S3 and S4 were not included, and Li₅FeO₄ in S2 was crushed to a particle size of 1µm-10 µm, so as to obtain the lithium ferrite lithium supplement.

### Comparative embodiment 2

A lithium ferrite lithium supplement, a difference between the preparation method in this comparative embodiment and that in Embodiment 1 lied in that, in S3, a mass ratio of Li₅FeO₄ to asphalt was 100:3.

### Comparative embodiment 3

A lithium ferrite lithium supplement, a difference between the preparation method in this comparative embodiment and that in Embodiment 1 lied in that, in S4, the second mixture was added to the tube furnace and calcined in the argon atmosphere; and a temperature was heated to 200 °C, held for 1 h, then heated to 700 °C, and held for 5 h, so as to obtain the lithium ferrite lithium supplement.

### Comparative embodiment 4

A lithium ferrite lithium supplement, a difference between the preparation method in this comparative embodiment and that in Embodiment 1 lied in that, in S4, the second mixture was added to the tube furnace and calcined in the argon atmosphere; and a temperature was directly heated to 700 °C, and held for 2.5 h, so as to obtain the lithium ferrite lithium supplement.

### [Cathode material]

### Embodiment 8

An embodiment of a cathode material of the present disclosure, a method for preparing the cathode material in this embodiment included: NCM811, a lithium ferrite lithium supplement, conductive carbon black, and polyvinylidene fluoride were mixed according to a mass ratio of 93.5:4:1:1.5, so at to prepare the cathode material. The lithium ferrite lithium supplement used the lithium ferrite lithium supplement obtained through preparation in Embodiment 1.

Then, N-methyl-2-pyrrolidone was used as a solvent, the cathode material and the solvent were mixed to prepare a cathode slurry, and the cathode slurry was coated on aluminum foil, a coating amount of a cathode active material being 75 mg/cm², so as to obtain a cathode plate.

### Comparative embodiment 5

An embodiment of a cathode material of the present disclosure, a method for preparing the cathode material in this embodiment included: NCM811, conductive carbon black, and polyvinylidene fluoride were mixed according to a mass ratio of 97.5:1:1.5, so at to prepare the cathode material.

Then, N-methyl-2-pyrrolidone was used as a solvent, the cathode material and the solvent were mixed to prepare a cathode slurry, and the cathode slurry was coated on aluminum foil, a coating amount of a cathode active material being 75 mg/cm², so as to obtain a cathode plate.

### [Secondary battery]

### Embodiment 9

An embodiment of a secondary battery of the present disclosure, a full battery was constituted by the cathode plate prepared in Embodiment 8 and a composite anode consisting of SiOx and graphite (a mass ratio of 1:8). Electrolyte used LiPF₆ as a lithium salt, with a concentration of 1 mol/L; and the solvent was a compound solvent in which mass ratio of ethylene carbonate to dimethyl carbonate was 3:7.

### Comparative embodiment 6

An embodiment of a secondary battery of the present disclosure, a full battery was constituted by the cathode plate prepared in Comparative embodiment 5 and a composite anode consisting of SiOx and graphite (a mass ratio of 1:8). Electrolyte used LiPF₆ as a lithium salt, with a concentration of 1 mol/L; and the solvent was a compound solvent in which mass ratio of ethylene carbonate to dimethyl carbonate was 3:7.

### II. Test method

### 1. Property test for lithium ferrite lithium supplement

(1) I_{D}/I_{G} was obtained through a Raman spectrum (HORIBA XploRA Nano spectrograph), and an excitation wavelength was 633 nm.
(2) An average thickness of a shell layer was obtained by a TEM (FEI-Talos F200S).
(3) Surface morphology was tested by an SEM (TESCAN MIRA LMS).
(4) A free radical concentration was tested through Electron Paramagnetic Resonance (EPR, Bruker-EmxPlus).
(5) A mass fraction of a carbon element was tested by an infrared carbon sulfur analyzer (HCS-140, Shanghai Dekai).
(6) A D50 particle size was obtained by a laser particle size analyzer.
(7) Air stability:
   a) The air stability was evaluated by comparing changes in XRD peak intensities of the lithium ferrite lithium supplement placed in air at 25 °C and 20% relative humidity for different durations.
   b) The air stability was evaluated by comparing changes in mass of the lithium ferrite lithium supplement placed in air at 25 °C and 20% relative humidity for different durations, and was tested at 0.05 C.
   c) The air stability was evaluated by comparing capacity retention rates of the lithium ferrite lithium supplement placed in air at 25 °C and different relative humidity conditions for different durations, and was tested at 0.05 C.
(8) Electrochemical reaction kinetics was tested by using a GITT, and an ion diffusion coefficient D under 3.65 V-3.75 V and 4.00 V-4.10 V was calculated. $D = \frac{4 {r}^{2}}{πτ} - {\left[\frac{Δ {E}_{s}}{Δ {E}_{t}}\right]}^{2}$ r was the particle size of the lithium ferrite lithium supplement; τ was a pulse time; △Es was a total voltage change caused by a pulse; and △Et was a total transient voltage change of a battery within the time τ.
(9) Rate performance: capacities at 0.05 C, 0.1 C, 0.2 C, 0.5 C, and 1 C were tested respectively.

### 2. Property test of cathode plate

Capacities at 0.1 C, 0.2 C, 0.3 C, 0.5 C, 1 C, 2 C and cycling performance at 0.33 C were tested respectively.

### 3. Property test for secondary battery

Capacities of the secondary battery at 0.1 C, 0.2 C, 0.3 C, 0.5 C, 1 C, 2 C and cycling performance at 0.5 C were tested respectively.

### III. Test result analysis for embodiments and comparative embodiments

Tables 1-3 were performance test results for the lithium ferrite lithium supplement.

**Table 1**

| Item | I_{D}/I_{G} | Average thickness of shell layer (nm) | Free radical concentration (spins/g) | Mass fraction of carbon element (%) | D50 particle size (µm) | Capacity retention rate after 24 h of placement at conditions of 25 °C and 20% relative humidity (%) | Specific capacity after 24 h of placement at conditions of 25 °C and 20% relative humidity (mAh/g) |
|---|---|---|---|---|---|---|---|
| Embodiment 1 | 1.05 | 83 | 1.343×10¹³ | 2.67 | 5.3 | 98.4 | 790.1 |
| Embodiment 2 | 1.01 | 102 | 1.413×10¹³ | 2.91 | 5.5 | 98.1 | 772.8 |
| Embodiment 3 | 1.20 | 123 | 1.312×10¹³ | 3.53 | 5.8 | 94.6 | 742.8 |
| Embodiment 4 | 1.06 | 196 | 1.312×10¹³ | 6.03 | 6.2 | 98.6 | 732.0 |
| Embodiment 5 | 1.05 | 60 | 1.211×10¹³ | 1.81 | 5.2 | 88.7 | 632.3 |
| Embodiment 6 | 1.04 | 82 | 1.01×10¹³ | 2.58 | 5.3 | 89.3 | 653.4 |
| Embodiment 7 | 1.05 | 80 | 1.98×10¹³ | 2.77 | 5.3 | 88.3 | 574.5 |
| Comparative embodiment 1 | / | / | 6.983×10¹² | / | 5 | 0 | 0 |
| Comparative embodiment 2 | 1.06 | 40 | 1.18×10¹³ | 1.31 | 5.1 | 70.9 | 512.8 |
| Comparative embodiment 3 | 0.95 | 77 | 1.08×10¹³ | 2.52 | 5.3 | 65.8 | 450.3 |
| Comparative embodiment 4 | 0.93 | 70 | 1.29×10¹³ | 2.38 | 5.3 | 63.2 | 432.2 |

**Table 2**

| Item | | Embodiment 1 |
|---|---|---|
| Capacity retention rate after placement at conditions of 25 °C and 20% relative humidity for different durations (%) | 8 h | 99.1 |
| | 24 h | 98.4 |
| | 48 h | 95.2 |
| | 72 h | 92.8 |
| Capacity retention rate after placement at conditions of 25 °C and different relative humidity for different durations (%) | 35% Relative humidity, 24 h | 97.1 |
| | 50% Relative humidity, 8 h | 94.0 |

From the above test results, it might be learned that, the air stability of the lithium ferrite lithium supplements in Embodiments 1-7 was superior to that in Comparative embodiments 1-4. In the embodiments of the present disclosure, the lithium ferrite lithium supplement also had good stability in a high-humidity environment, that is, the shell layer of the lithium ferrite lithium supplement might effectively prevent the H₂O from being in contact with LFO in the nuclear layer. Furthermore, by comparing the performance test results of Embodiments 1-3 and Embodiments 4-5, it might be found that, when the mass fraction of the carbon element in the lithium ferrite lithium supplement was 2%-5%, the air stability was better, which might be due to a better coating effect of the nuclear layer by the shell layer within the above range, more facilitating the prevention of the LFO in the nuclear layer from being in contact with the H₂O and CO₂ in air. By comparing the performance test results of Embodiments 1-3 and Embodiments 6-7, it might be found that, when the free radical concentration of the lithium ferrite lithium supplement was 1.2×10¹³ spins/g-1.8×10¹³ spins/g, the air stability was better.

**Table 3**

| Item | Specific capacity after 24 h of placement at conditions of 25 °C and 20% relative humidity (mAh/g) | Specific capacity after 48 h of placement at conditions of 25 °C and 20% relative humidity (mAh/g) | Specific capacity after 72 h of placement at conditions of 25 °C and 20% relative humidity (mAh/g) | Capacity retention rate after 24 h of placement at conditions of 25 °C and 20% relative humidity (%) | Capacity retention rate after 48 h of placement at conditions of 25 °C and 20% relative humidity (%) | Capacity retention rate after 72 h of placement at conditions of 25 °C and 20% relative humidity (%) |
|---|---|---|---|---|---|---|
| Embodiment 1 | 790.1 | 764.4 | 745.1 | 98.4 | 95.2 | 92.8 |
| Embodiment 2 | 772.8 | 742.9 | 725.5 | 98.1 | 94.3 | 92.1 |
| Embodiment 3 | 742.8 | 710.6 | 695.7 | 94.6 | 90.5 | 88.6 |
| Embodiment 4 | 732.0 | 707.5 | 688.2 | 98.6 | 95.3 | 92.7 |
| Embodiment 5 | 632.3 | 588.8 | 571.0 | 88.7 | 82.6 | 80.1 |
| Embodiment 6 | 653.4 | 605.8 | 588.3 | 89.3 | 82.8 | 80.4 |
| Embodiment 7 | 574.5 | 534.1 | 521.1 | 88.3 | 82.1 | 80.1 |

Further, as shown by data in Table 3, the specific capacity of the lithium ferrite lithium supplement in the embodiments of the present disclosure after 24 h of placement was higher than 570 mAh/g, and the capacity retention rate was more than 88%; the specific capacity after 48 h of placement was higher than 530 mAh/g, and the capacity retention rate was more than 82%; and the specific capacity after 72 h of placement was higher than 520 mAh/g, and the capacity retention rate was more than 80%.

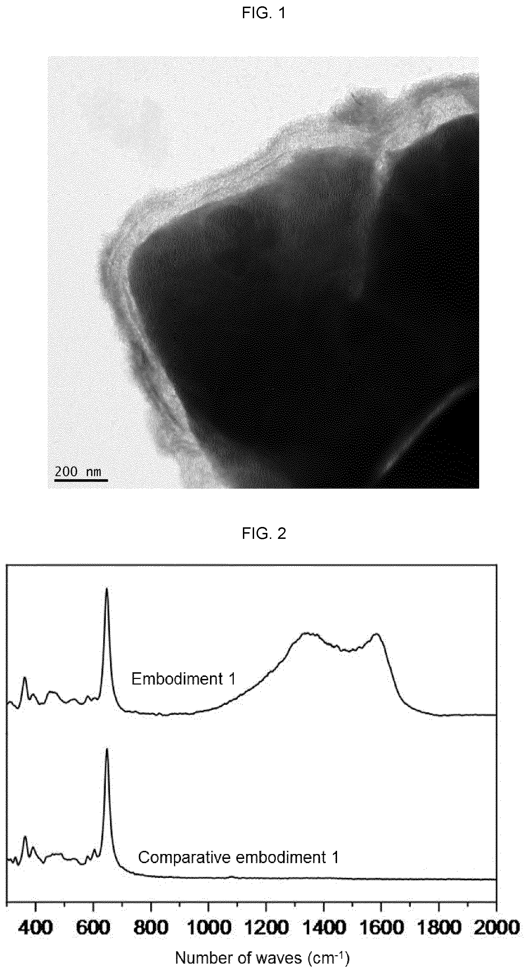

Further, Fig. 1 was a TEM diagram of a lithium ferrite lithium supplement according to Embodiment 1. As shown in the figure, the lithium ferrite lithium supplement of the present disclosure had a core-shell structure, and a shell layer structure was uniform, and formed good coating to a nuclear layer material.

Further, Fig. 2 was a Raman spectrum diagram of a lithium ferrite lithium supplement according to Embodiment 1 and Comparative embodiment 1. As shown in the figure, a D peak and a G peak were shown near 1350 cm⁻¹ and near 1580 cm⁻¹ in the Raman spectrum diagram of Embodiment 1, indicating that the shell layer containing a carbon material was formed in the lithium ferrite lithium supplement of the present disclosure.

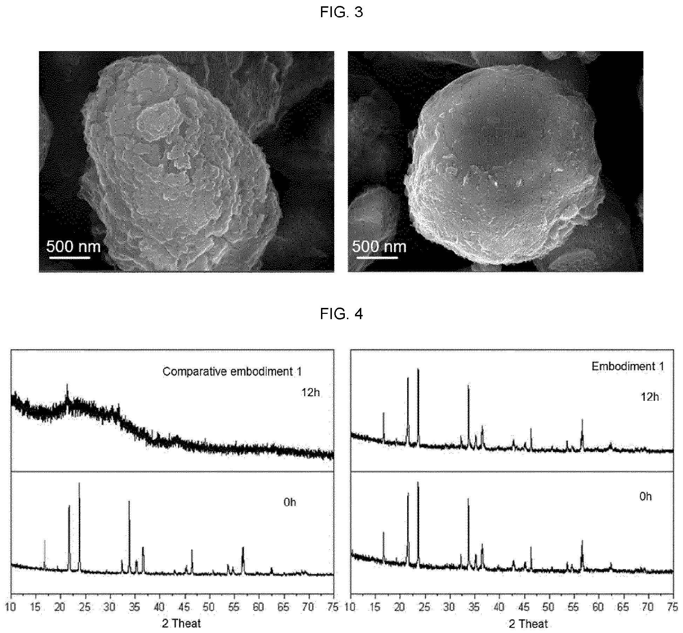

Further, Fig. 3 was an SEM diagram of a lithium ferrite lithium supplement according to Embodiment 1 and Comparative embodiment 1. As shown in the figure, a surface of the lithium ferrite lithium supplement having the core-shell structure of the present disclosure was smoother, and a surface of the lithium ferrite lithium supplement without being subjected to carbon coating was rougher. The figure indicated that there was a compact shell layer on the surface of the lithium ferrite lithium supplement of the present disclosure, facilitating improvement of the air stability of the LFO.

Further, Fig. 4 was an XRD diagram of a lithium ferrite lithium supplement placed in air at 25 °C and 20% relative humidity for different times according to Embodiment 1 and Comparative embodiment 1. As shown in the figure, after 12 hours of placement, an XRD peak intensity of the lithium ferrite lithium supplement in Embodiment 1 remained unchanged, indicating that the stability of the lithium ferrite lithium supplement in air was great; and there was no significant peak shapes in the XRD diagram of the lithium ferrite lithium supplement in Comparative embodiment 1 after 12 h of placement in air, indicating that the air stability of the lithium ferrite lithium supplement was poor.

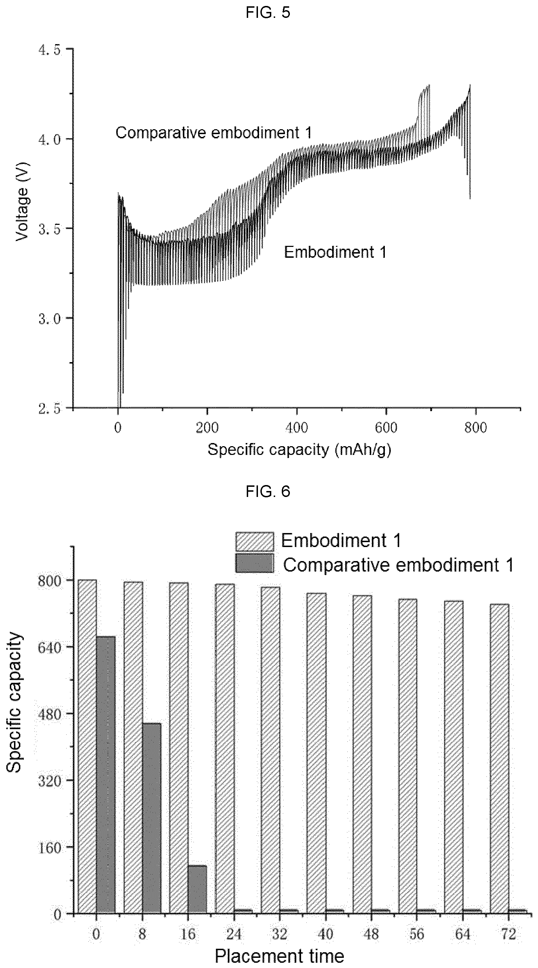

Further, Fig. 5 is a GITT test diagram of a lithium ferrite lithium supplement according to Embodiment 1 and Comparative embodiment 1. As shown in the, LFO@C in Embodiment 1 had a lower lithium ion extraction potential compared to the LFO in Comparative embodiment 1, such that more lithium ions could be released. Through calculation, within a voltage range of 3.65 V-3.75 V, a diffusion coefficient D of the lithium ferrite lithium supplement in Embodiment 1 was 5.48×10⁻¹¹ cm²/s, a diffusion coefficient D of the lithium ferrite lithium supplement in Comparative embodiment 1 was 4.96×10⁻¹³ cm²/s, and Embodiment 1 was approximately 110 times that of Comparative embodiment 1. Within the voltage range of 4.00 V-4.10 V, the diffusion coefficient D of the lithium ferrite lithium supplement in Embodiment 1 was 7.88×10⁻¹² cm²/s, the diffusion coefficient D of the lithium ferrite lithium supplement in Comparative embodiment 1 was 1.87×10⁻¹² cm²/s, and Embodiment 1 was approximately 4 times that of Comparative embodiment 1. The above results were related to the formation of a large number of oxygen vacancy defects during carbon coating, which can effectively improve migration path of lithium ions in the LFO.

Further, Fig. 6 was a specific capacity data diagram of a lithium ferrite lithium supplement placed in air at 25 °C and 20% relative humidity for different times according to Embodiment 1 and Comparative embodiment 1. After 8 hours of placement, the specific capacity of the lithium ferrite lithium supplement in Embodiment 1 was 796 mAh/g, and the capacity retention rate was 99.1%; the specific capacity after 24 hours of placement was 790.1 mAh/g, and the capacity retention rate might reach 98.4%; the specific capacity after 48 hours of placement was 764 mAh/g, and the capacity retention rate might reach 95.2%; the specific capacity after 72 hours of placement was 745 mAh/g, and the capacity retention rate might reach 92.8%; and the capacity retention rate of the lithium ferrite lithium supplement in Comparative embodiment 1 reduced to 0. The results might also indicate that the lithium ferrite lithium supplement in the embodiments of the present disclosure had excellent air stability.

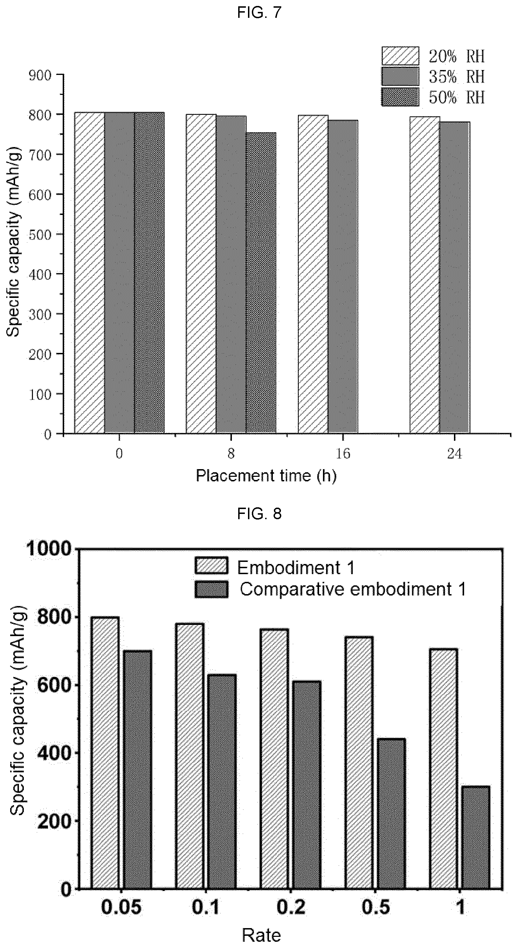

Further, Fig. 7 was a specific capacity data diagram of a lithium ferrite lithium supplement placed in air at 25 °C and different relative humidity conditions for different times according to Embodiment 1. As shown in the figure, after 24 hours of placement in air at 35% relative humidity, the specific capacity of the lithium ferrite lithium supplement in Embodiment 1 was 779 mAh/g, and the capacity retention rate was 97.1%. Furthermore, after 8 hours of placement at 50% relative humidity, the specific capacity of the lithium ferrite lithium supplement still remained more than 754 mAh/g, and the capacity retention rate was 94%. The results might also indicate that, the shell layer in the lithium ferrite lithium supplement of the present disclosure might effectively prevent the H₂O in air from reacting with the LFO in the nuclear layer, thereby improving the air stability.

Further, Fig. 8 was a test diagram of rate performance of a lithium ferrite lithium supplement according to Embodiment 1 and Comparative embodiment 1. As shown in the figure, when a current density increased from 0.05 C to 1 C, the capacity retention rate of the lithium ferrite lithium supplement in Embodiment 1 was 88%. In contrast, the lithium ferrite lithium supplement in Comparative embodiment 1 was subjected to significant capacity fading under the same condition, and the capacity retention rate was nearly 43%. The results indicated that through carbon coating, the electrochemical performance of the lithium ferrite lithium supplement of the present disclosure was significantly improved.

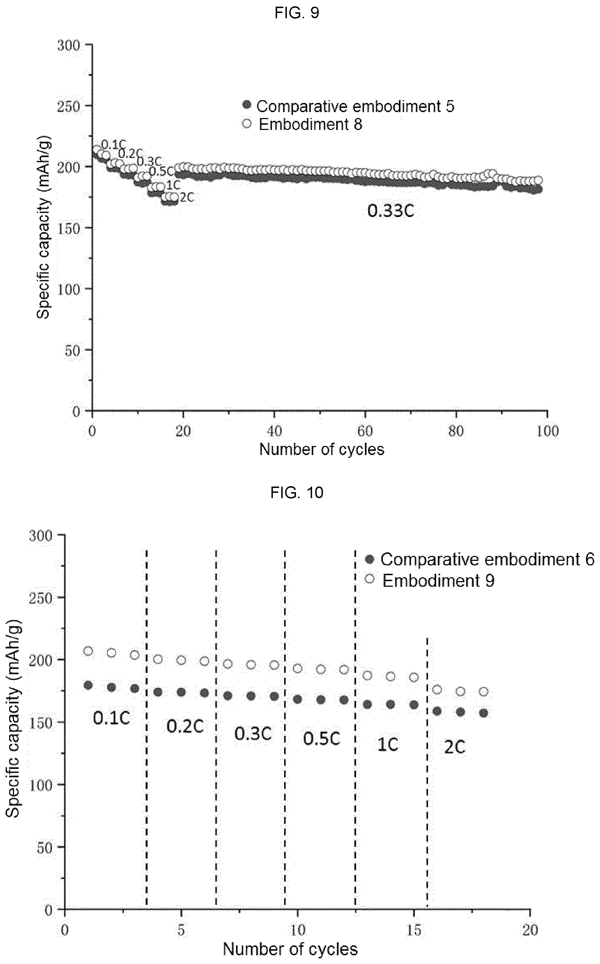

Further, Fig. 9 was a test diagram of rate performance and cycling performance of a cathode plate in half battery according to Embodiment 8 and Comparative embodiment 5. As shown in the figure, there was no sudden drop in the specific capacity of the cathode material in Embodiment 8 at rates of 0.1 C, 0.2 C, 0.3 C, 0.5 C, 1 C, and 2 C, and the capacity retention rate for 100 cycles at 0.33 C was higher than 93%. The results indicated that by adding the lithium ferrite lithium supplement, the rate performance and cycling performance of the cathode plate were certainly improved.

Further, Fig. 10 was a test diagram of rate performance of a secondary battery according to Embodiment 9 and Comparative embodiment 6. As shown in the figure, the secondary battery of the present disclosure had great rate performance, and the specific capacity of the secondary battery significantly increased compared to the secondary battery without adding the lithium ferrite lithium supplement.

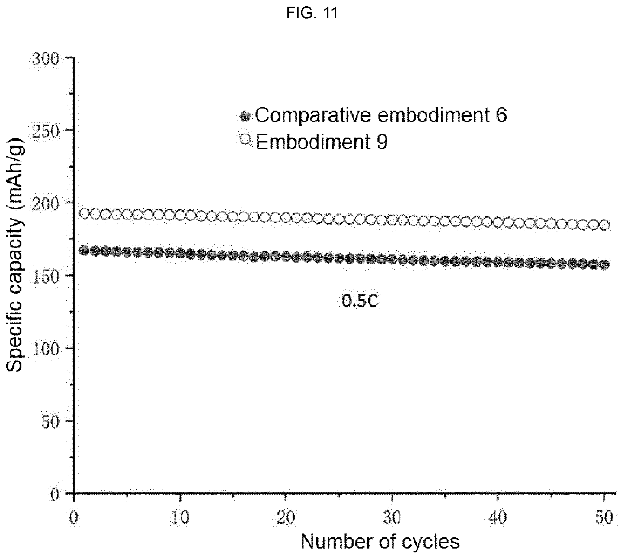

Further, Fig. 11 was a test diagram of cycling performance of a secondary battery at 0.5 C according to Embodiment 9 and Comparative embodiment 6. As shown in the figure, the cycling performance in Embodiment 9 was superior to that in Comparative embodiment 6, and the specific capacity was higher. The results indicated that in the present disclosure, by adding the lithium ferrite lithium supplement, the energy density and cycling performance of the secondary battery were significantly improved.

It is to be noted that the present disclosure is not limited to the aforementioned embodiments. The above embodiments are only illustrative, and embodiments that have the substantially same composition and play the same acting role as the technical idea within the scope of technical solution of the present disclosure are all included in the technical scope of the present disclosure. In addition, other embodiments constructed by applying various variations that can be thought of by those skilled in the art and by combining some constituent elements of the embodiments without departing from the scope of the main idea of the present disclosure are also included in the scope of the present disclosure.

## Claims

1. A lithium ferrite lithium supplement, comprising a nuclear layer and a shell layer covering a surface of the nuclear layer, wherein a material of the nuclear layer comprises Li₅FeO₄, and a material of the shell layer comprises a carbon material; I_{D}/I_{G} of the lithium ferrite lithium supplement is 1.0-1.2; and an average thickness of the shell layer is 60 nm-200 nm.

2. The lithium ferrite lithium supplement according to claim 1, wherein a free radical concentration of the lithium ferrite lithium supplement is 1.2×10¹³ spins/g-1.8×10¹³ spins/g.

3. The lithium ferrite lithium supplement according to claim 1, wherein in the lithium ferrite lithium supplement, a mass fraction of a carbon element is 2%-5%.

4. The lithium ferrite lithium supplement according to any one of claims 1 to 3, wherein a D50 particle size of the lithium ferrite lithium supplement is 3 µm-6 µm.

5. The lithium ferrite lithium supplement according to any one of claims 1 to 3, comprising at least one of the following features:
(1) a specific capacity of the lithium ferrite lithium supplement after 24 h of exposure in air at 25 °C and 20% relative humidity is higher than 570 mAh/g;
(2) a specific capacity of the lithium ferrite lithium supplement after 48 h of exposure in air at 25 °C and 20% relative humidity is higher than 530 mAh/g; or
(3) a specific capacity of the lithium ferrite lithium supplement after 72 h of exposure in air at 25 °C and 20% relative humidity is higher than 520 mAh/g.

6. The lithium ferrite lithium supplement according to any one of claims 1 to 3, comprising at least one of the following features:
(1) a capacity retention rate of the lithium ferrite lithium supplement after 24 h of exposure in air at 25 °C and 20% relative humidity is more than 88%;
(2) a capacity retention rate of the lithium ferrite lithium supplement after 48 h of exposure in air at 25 °C and 20% relative humidity is more than 82%; or
(3) a capacity retention rate of the lithium ferrite lithium supplement after 72 h of exposure in air at 25 °C and 20% relative humidity is more than 80%.

7. A cathode material, comprising a cathode active material, a conductive agent, a binder, and a lithium supplement, wherein the lithium supplement is the lithium ferrite lithium supplement according to any one of claims 1 to 6; and a mass ratio of the lithium supplement to the cathode active material is (1:100)-(5:100).

8. The cathode material according to claim 7, wherein a capacity retention rate of the cathode material after 100 cycles at a rate of 0.33 C is higher than 93%.

9. A cathode plate, comprising a current collector and a cathode material located on one side or two sides of the current collector, wherein the cathode material is the cathode material according to claim 8.

10. A secondary battery, comprising a cathode plate, an anode plate, and a separator, wherein the cathode plate is the cathode plate according to claim 9.
